# EUROPÄISCHE PATENTSCHRIFT

(11) **EP 3 108 461 B1**
(45) Veröffentlichungstag und Bekanntmachung des Hinweises auf die Patenterteilung: **15.06.2022**
(21) Anmeldenummer: 15705913.0
(22) Anmeldetag: 18.02.2015
(51) Int. Cl.: G07D 7/20

(54) **VERFAHREN ZUM UNTERSUCHEN EINES WERTDOKUMENTS UND MITTEL ZUR DURCHFÜHRUNG DES VERFAHRENS**
METHOD FOR EXAMINING A VALUE DOCUMENT, AND MEANS FOR CARRYING OUT THE METHOD
PROCÉDÉ D'EXAMEN D'UN DOCUMENT DE VALEUR ET MOYENS D'EXÉCUTION DU PROCÉDÉ

(30) Priorität: 19.02.2014 DE 102014002273
(43) Veröffentlichungstag der Anmeldung: 28.12.2016
(73) Patentinhaber: Giesecke+Devrient Currency Technology GmbH, 81677 München (DE)
(72) Erfinder: SCHMALZ, Steffen, 81375 München (DE); SU, Shanchaun, 85579 Neubiberg (DE); HOLL, Norbert, 82110 Germering (DE)
(74) Vertreter: Giesecke + Devrient IP
(86) Internationale Anmeldenummer: PCT/EP2015/000358
(87) Internationale Veröffentlichungsnummer: WO 2015/124294

(56) Entgegenhaltungen:
- EP-A1- 1 011 079
- EP-A1- 2 355 056
- EP-A1- 2 660 787
- JP-K1- H01 124 087

## Beschreibung

Die vorliegende Erfindung betrifft ein Verfahren zum Untersuchen eines Wertdokuments unter Verwendung eines digitalen Bildes des Wertdokuments, das Pixel umfasst, und Mittel zur Durchführung des Verfahrens.

Unter Wertdokumenten werden dabei blattförmige Gegenstände verstanden, die beispielsweise einen monetären Wert repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Coupons, Gutscheine, Schecks und insbesondere Banknoten.

Solche Wertdokumente sollen häufig daraufhin überprüft werden, ob sie vorgegebene Merkmale oder auch Fehler aufweisen. Zur maschinellen Prüfung der Wertdokumente werden Wertdokumentbearbeitungsvorrichtungen eingesetzt. Typischerweise verfügen solche Wertdokumentbearbeitungsvorrichtungen über optische Sensoren, mittels derer Bilder der Wertdokumente erfasst werden. Diese Bilder können dann dazu verwendet werden zu prüfen, ob das Wertdokument bestimmte Merkmale oder auch Fehler aufweist.

Bedingt durch die hohe Auflösung moderner optischer Sensoren und der hohen Bearbeitungsgeschwindigkeit moderner Wertdokumentbearbeitungsvorrichtungen ist es wichtig, die genannten Prüfungen möglichst schnell und effizient durchführen zu können. Dies trifft insbesondere für Prüfungen von Fehlern zu, deren Form und Ausdehnung vor der Prüfung nicht bekannt sind.

EP 2 660 787 A1 beschreibt ein Verfahren zum Kategorisieren von Defekten auf einem Medienobjekt. Das Verfahren umfasst folgende Schritte: Empfangen eines binarisierten Bildes des Medienobjekts, das eine Vielzahl von Pixeln umfasst, von denen jedes entweder eine Intensität für einen möglichen Defekt oder eine Nicht-Defektintensität aufweist; und Identifizieren von einem oder mehreren Blobs, die angrenzende Pixel umfassen, die eine Intensität für einen möglichen Defekt aufweisen. Für jeden identifizierten Blob umfasst das Verfahren weiter das Vergleichen der Größe des Blobs mit einem Schadenschwellwert, das Ignorieren des Blobs, wenn die Blobgröße kleiner als der Schadensschwellwert ist und für jeden identifizierten Blob mit einer Größe, die gleich dem Schadensschwellwert ist oder diesen überschreiten, Kategorisieren des identifizierten Blobs. Die EP 2 660 787 A1 offenbart somit die Präambel des ersten Hauptanspruches. Der vorliegenden Erfindung liegt die Aufgabe zugrunde, ein Verfahren zum Uritersuchen eines Wertdokuments unter Verwendung eines digitalen Bildes des Wertdokuments und Mittel zur Durchführung des Verfahrens bereitzustellen.

Die Aufgabe wird gelöst durch ein Verfahren nach Anspruch 1 und insbesondere ein Verfahren zum Untersuchen eines Wertdokuments unter Verwendung eines digitalen Bildes des Wertdokuments, das Pixel umfasst, bei dem das Bild auf das Vorhandensein wenigstens einer Irregularität betreffend eine vorgegebene Eigenschaft des Wertdokuments untersucht wird, bei Auffinden einer solchen Irregularität in Abhängigkeit von der Größe und/oder Lage und/oder Form der Irregularität in dem Bild ein Untersuchungsbereich festgelegt wird, der die Irregularität darstellt, und die Irregularität geprüft wird, wobei nur ein Teil derjenigen Pixel des digitalen Bildes verwendet wird, die dem Untersuchungsbereich entsprechen.

Das erfindungsgemäße Verfahren kann insbesondere mittels einer Auswerteeinrichtung, die eine Datenverarbeitungseinrichtung mit wenigstens einem Prozessor aufweist, durchgeführt werden. Die Aufgabe wird daher auch gelöst durch ein Computerprogramm mit Programmcode, bei dessen Ausführung mittels wenigstens einen Prozessors ein erfindungsgemäßes Verfahren ausgeführt wird. Weiterer Gegenstand der vorliegenden Erfindung ist auch ein physischer Datenträger, auf dem ein erfindungsgemäßes Computerprogramm gespeichert ist. Bei dem wenigstens einen Prozessor kann es sich um einen oder mehrere Prozessoren handeln, die gleich oder unterschiedlich ausgebildet sein können.

Bei dem Verfahren wird ein digitales Bild des Wertdokuments verwendet, das insbesondere mittels eines Sensors erfasst worden sein kann. Bei dem

Verfahren genügt es prinzipiell, dass das digitale Bild vorliegt, beispielsweise in einer Speichereinrichtung einer zur Durchführung des Verfahrens verwendeten Auswerteeinrichtung. Es ist jedoch bevorzugt, dass bei dem Verfahren das digitale Bild des Wertdokuments unter Verwendung eines optischen Sensors erfasst wird. Die Aufgabe wird daher auch gelöst durch eine Untersuchungseinrichtung zum Untersuchen eines Wertdokuments mit einem optischen Sensor zum Erfassen eines digitalen Bildes des Wertdokuments, und einer Auswerteeinrichtung, die dazu ausgebildet ist, unter Verwendung eines mittels des optischen Sensors erfassten digitalen Bildes ein erfindungsgemäßes Verfahren durchzuführen.

Insbesondere kann bei der Untersuchungseinrichtung die Auswerteeinrichtung wenigstens einen Prozessor und einen Speicher aufweisen, in dem ein erfindungsgemäßes Computerprogramm gespeichert ist, so dass bei Ausführung des Programmcodes des Computerprogramms mittels des Prozessors ein erfindungsgemäßes Verfahren durchgeführt wird. Weiter kann die Auswerteeinrichtung auch ein mit dem Prozessor zusammenarbeitendes FPGA aufweisen.

Bei dem Verfahren wird ein digitales Bild des Wertdokuments verwendet. Dieses weist Pixel auf, die jeweils einem Ort in einem Erfassungsbereich eines zur Erfassung des Bildes verwendeten optischen Sensors entsprechen. Das Bild weist dabei eine Auflösung auf, die wenigstens teilweise durch das örtliche Auflösungsvermögen des Sensors bestimmt ist und insbesondere durch die Anzahl der Pixel bezogen auf eine vorgegebene Fläche in dem Erfassungsbereich gegeben sein kann. Den Pixeln sind jeweils Pixeldaten zugeordnet, die wenigstens eine Bildeigenschaft des jeweiligen Pixels, in Abhängigkeit von der Art des Bildes beispielsweise eine Helligkeit oder Farbkoordinaten in einem Farbraum umfassen können. Weiter kann das digitale Bild ein Remissionsbild des Wertdokuments oder ein Transmissionsbild des Wertdokuments sein. Dementsprechend kann der verwendete optische Sensor ein Remissions- oder Transmissionssensor sein. In beiden Fällen kann der Sensor zu Erfassung eines Bildes in nur einem Wellenlängenbereich im optischen Spektrum oder in wenigstens zwei verschiedenen Wellenlängenbereichen, vorzugsweise drei Farben, ausgebildet sein.

Bei dem Verfahren wird ein Wertdokument geprüft, das einen oder mehrere vorgegebene Wertdokumenttypen aufweisen kann. Ist es vom Wertdokumenttyp Banknote, kann dieser weiter spezifiziert sein durch die Währung, die Stückelung und gegebenenfalls die Emission des Wertdokuments.

Bei dem Verfahren wird das Bild des Wertdokuments zunächst auf das Vorhandensein wenigstens einer Irregularität betreffend eine vorgegebene Eigenschaft des Wertdokuments untersucht. Unter einer Irregularität betreffend eine vorgegebene Eigenschaft des Wertdokuments wird im Rahmen der vorliegenden Erfindung insbesondere eine in dem Bild vorhandene oder aus diesem ableitbare Abweichung zwischen dem Wertdokument und einem für Wertdokumente des gleichen Wertdokumenttyps betreffend die vorgegebene Eigenschaft verstanden.

Vorzugsweise kann die vorgegebene Eigenschaft des Wertdokuments dessen Form sein. Es kann dann beispielsweise eine Irregularität der Form, d.h. eine Abweichung der aus dem Bild ermittelbaren Form von einer für das Wertdokument vorgegebenen Form bzw. einer für Wertdokumente desselben Wertdokumenttyps vorgegebenen Eigenschaft sein.

Bei Auffinden einer solchen Irregularität wird dann in Abhängigkeit von der Größe und/oder Lage und/oder Form der Irregularität in dem Bild ein Untersuchungsbereich festgelegt, der die Irregularität darstellt. Die Größe und/oder Form und/oder Lage des Untersuchungsbereichs kann dabei durch die Größe und/oder Lage und/oder Form der Irregularität und zusätzlich die Art der Irregularität bestimmt sein. Der Untersuchungsbereich ist dabei kleiner als des Bild des Wertdokuments und insbesondere nur so groß, wie es für die weitere Untersuchung der Irregularität notwendig ist.

Zur Prüfung der Irregularität wird weiter nur ein Teil derjenigen Pixel des digitalen Bildes verwendet, die dem Untersuchungsbereich entsprechen. Damit brauchen nur sehr wenige Pixel zur Untersuchung der Irregularität verwendet zu werden: zum einen erfolgt eine Einschränkung der Pixelanzahl durch die Beschränkung auf den Untersuchungsbereich und zum anderen durch die Beschränkung auf nur einen Teil der Pixel. Da nur ein Teil der Pixel verwendet wird, ohne die Pixeldaten für ein jeweiliges Pixel in Abhängigkeit von Pixeldaten benachbarter Pixel zu verändern, entsteht kein zusätzlicher Rechenaufwand.

Insgesamt kann so eine sehr hohe Ausführungsgeschwindigkeit erzielt werden, auch wenn die Bilder eine große Anzahl von Pixeln aufweisen. Grundsätzlich kann als vorgegebene Eigenschaft jede beliebige Eigenschaft eines Wertdokuments verwendet werden, die sich aus einem Bild des Wertdokuments ergibt. Vorzugsweise ist bei dem Verfahren die vorgegebene Eigenschaft des Wertdokuments dessen Form. Die Irregularität kann dann eine Abweichung von einer für das Wertdokument vorgegebenen Form, beispielsweise einer Rechteckform sein, beispielsweise das Fehlen einer Ecke oder wenigstens eine nicht geradlinig verlaufende Kante. Das Verfahren eignet sich für diese Eigenschaft besonders, da Formabweichungen meist auf Längenskalen auftreten, die deutlich größer als die durch ein Pixel dargestellte Fläche bzw. deren Ausdehnung sind, und daher auch bei geringerer Auflösung gut zu untersuchen sind.

Zum Prüfen der Irregularität braucht nicht immer nur ein Teil der Pixel, die den Untersuchungsbereich darstellen, verwendet zu werden. So kann vorzugsweise bei dem Verfahren beim Prüfen der Irregularität nur dann nur ein Teil derjenigen Pixel, die dem. Untersuchungsbereich entsprechen, verwendet werden, wenn die Größe des Untersuchungsbereichs oder der Anzahl der Pixel, die den Untersuchungsbereich darstellen, einen vorgegebenen Grenzwert für die Größe des Untersuchungsbereichs bzw. die Anzahl der Pixel überschreitet. Der jeweilige Grenzwert kann insbesondere in Abhängigkeit von der Rechengeschwindigkeit der Auswerteeinrichtung und der zur Durchführung des Verfahrens zur Verfügung stehenden Zeit vorgegeben sein.

Bei dem Verfahren wird die Irregularität weiter geprüft, nachdem der Untersuchungsbereich festgelegt wurde. Die Irregularität in dem Bild kann nämlich verschiedene Ursachen haben, die vorzugsweise ermittelt werden. Daher wird beim Prüfen der Irregularität vorzugsweise ermittelt, ob die Irregularität einem von wenigstens zwei möglichen Wertdokumentfehlern entspricht. Die Wertdokumentfehler sind dabei so beschaffen, dass sie bei einer ersten, sehr einfachen Prüfung zu einer wenigstens ähnlichen Irregularität in einem Bild führen. Unter Wertdokumentfehlern werden dabei auch Fehler verstanden, die zwar keine Beschädigung des Wertdokuments darstellen, aber dessen Tauglichkeit zur maschinellen Bearbeitung oder dessen Brauchbarkeit beeinträchtigten können. Beispielsweise kann eine Irregularität, die in dem Fehlen einer Ecke in dem Bild eines rechteckigen Wertdokuments besteht, wenigstens zwei Ursachen haben: eine abgetrennte Ecke oder ein Eselsohr, d. h. eine zurückgefaltete Ecke. Auf diese Weise kann das Verfahren zur schnellen Erkennung vorgegebener Wertdokumentfehler verwendet werden. Die Größe und/oder Form und/oder Lage des Untersuchungsbereiches kann insbesondere unter anderem auch in Abhängigkeit von der Art der Wertdokumentfehler festgelegt werden.

Prinzipiell kann bei dem Verfahren der Teil der Pixel beliebig, aber in geeigneter Form zum Prüfen der Irregularität gewählt sein. Bei dem Verfahren bildet jedoch der Teil der Pixel des digitalen Bildes ein in seiner Auflösung reduziertes Bild des Untersuchungsbereichs. Dies hat den Vorteil, dass das in seiner Auflösung reduzierte Bild mit Verfahren geprüft werden kann, wie sie auch für andere Bilder verwendet werden.

Besonders bevorzugt können bei dem Verfahren die Pixel des digitalen Bildes Orten auf einem Rechteckgitter entsprechen und der bei dem Prüfen verwendete Teil der Pixel kann auf einem Untergitter des Rechteckgitters liegen. Beispielsweise kann das Untergitter eine Gitterkonstante, d. h. Seitenlänge einer Gitterzelle aufweisen, die doppelt so groß ist, wie die des ursprünglichen Gitters.

Das erfindungsgemäße Verfahren kann vorzugsweise mittels einer Vorrichtung zur Bearbeitung von Wertdokumente durchgeführt werden. Gegenstand der vorliegenden Erfindung ist daher auch eine Vorrichtung zur Bearbeitung von Wertdokumenten mit einer Zuführeinrichtung zur Zuführung von einzelnen oder vereinzelten zu bearbeitenden Wertdokumenten, einer Ausgabeeinrichtung mit wenigstens einem Ausgabeabschnitt zur Aufnahme bearbeiteter Wertdokumente, einer Transporteinrichtung zum Transportieren von einzelnen oder vereinzelten Wertdokumenten von der Zuführeinrichtung zu der Ausgabeeinrichtung, und einer erfindungsgemäßen Unter-. suchungsvorrichtung, wobei der optische Sensor der Untersuchungseinrichtung dazu ausgebildet und eingerichtet ist, ein digitales Bild des Wertdokuments zu erfassen, während es mittels der Transporteinrichtung transportiert wird. Die Auswerteeinrichtung der Untersuchungsvorrichtung kann vorzugsweise auch wenigstens einen Teil einer Steuereinrichtung der Wertdokumentbearbeitungsvorrichtung bilden, die dann wenigstens die Transporteinrichtung in Abhängigkeit von dem Ergebnis des Prüfens ansteuert.

Die Erfindung wird im Folgenden noch weiter beispielhaft an Hand der Zeichnungen erläutert. Es zeigen:
- Fig. 1: eine schematische Ansicht einer Wertdokumentbearbeitungsvorrich-tung in Form einer Banknotensortiervorrichtung,
- Fig. 2: eine schematische Darstellung eines Bildes eines Wertdokuments mit einem Eselsohr,
- Fig. 3: ein vereinfachtes Ablaufdiagramm einer ersten Ausführungsform eines mittels der Vorrichtung in Fig. 1 durchführbaren Verfahrens zum Untersuchen von Wertdokumenten,
- Fig. 4: eine schematische Darstellung eines Teils des Bildes des Wertdokuments in Fig. 2 zur Veranschaulichung von Schritten des Verfahrens in Fig. 3,
- Fig. 5: ein vereinfachtes Ablaufdiagramm eines Schrittes S16 des Verfahrens in Fig. 3,
- Fig. 6: ein vereinfachtes Ablaufdiagramm einer zweiten Ausführungsform eines mittels der Vorrichtung in Fig. 1 durchführbaren Verfahrens zum Untersuchen von Wertdokumenten, und
- Fig. 7: schematische Darstellungen eines Bildes eines Wertdokuments mit einer Z-Falte in einer Ansicht orthogonal auf die Fläche des Wertdokuments (A) und einer Ansicht parallel zur Fläche des Wertdokuments (B).

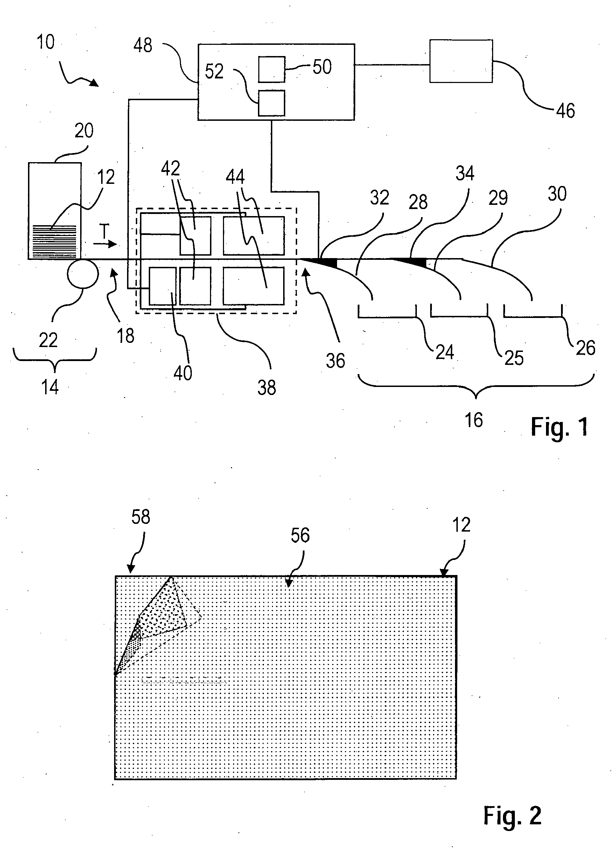

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit und des Zustands von bearbeiteten Wertdokumenten ausgebildet. Die im Folgenden beschriebenen Komponenten der Vorrichtung sind in einem nicht gezeigten Gehäuse der Vorrichtung angeordnet oder an diesem gehalten, soweit sie nicht als extern bezeichnet sind.

Die Vorrichtung verfügt über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfasst im Beispiel ein Eingabefach 20 für einen Wertdokumentstapel und einen Vereinzeler 22 zum Vereinzeln von Wertdokumenten aus dem Wertdokumentstapel in dem Eingabefach 20 und zum Zuführen der vereinzelten Wertdokumente zu der Transporteinrichtung 18. Die Ausgabeeinrichtung 16 weist im Beispiel drei Ausgabeabschnitte 24, 25 und 26 auf, in die bearbeitete Wertdokumente sortiert nach dem Ergebnis der Bearbeitung sortiert werden können. Im Beispiel umfasst jeder der Abschnitte ein Stapelfach und ein nicht gezeigtes Stapelrad, mittels dessen zugeführte Wertdokumente in dem Stapelfach abgelegt werden können. In anderen Ausführungsbeispielen kann einer der Ausgabeabschnitte durch eine Einrichtung zur Vernichtung von Banknoten ersetzt sein.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 ist eine Sensoreinrichtung 38 angeordnet, die während des Vorbeitransports von Wertdokumenten physikalische Eigenschaften der Wertdokumente misst und die Messergebnisse wiedergebende Sensorsignale bildet. In diesem Beispiel verfügt die Sensoreinrichtung 38 über drei Sensoren, nämlich einen optischen Remissionssensor 40, der ein Remissionsfarbbild und ein Remissions-IR-Bild des Wertdokuments erfasst, einen optischen Transmissionssensor 42, der ein Transmissionsbild und eine Transmissions-IR-Bild des Wertdokuments erfasst, und einen Transmissionsultraschallsensor 44, der ortsaufgelöst als Ultraschalleigenschaft die Ultraschalltransmission des Wertdokuments erfasst bzw. misst und im Folgenden der Einfachheit halber nur als Ultraschallsensor bezeichnet wird. Die von den Sensoren gebildeten Sensorsignale entsprechen Messdaten bzw. Rohdaten der Sensoren, die je nach Sensor bereits einer Korrektur, beispielsweise in Abhängigkeit von Kalibrierdaten und/ oder Rauscheigenschaften, unterzogen worden sein können.

Zur Erfassung und Anzeige von Bedienungsdaten verfügt die Wertdokumentbearbeitungsvorrichtung 10 über eine Ein-/Ausgabeeinrichtung 46. Die Ein-/Ausgabeeinrichtung 46 ist im Beispiel durch eine berührungsempfindliche Anzeigeeinrichtung ("touch screen") realisiert. In anderen Ausführungsbeispielen kann sie beispielsweise eine Tastatur und eine Anzeigeeinrichtung, beispielsweise eine LCD-Anzeige umfassen.

Eine Steuer- und Auswerteeinrichtung 48 ist über Signalverbindungen mit der Sensoreinrichtung 38, der Ein-/Ausgabeeinrichtung 46 und der Transporteinrichtung 18, insbesondere den Weichen 32 und 34, verbunden.

Die Steuer- und Auswerteeinrichtung 48 bildet eine Datenverarbeitungseinrichtung und verfügt neben entsprechenden in den Figuren nicht gezeigten Datenschnittstellen für die Sensoreinrichtung 38 bzw. deren Sensoren über einen Prozessor 50 und einen mit dem Prozessor 50 verbundenen Speicher 52, in dem wenigstens ein Computerprogramm mit Programmcode gespeichert ist. Bei Ausführung des Computerprogramms wertet die Steuer- und Auswerteeinrichtung 48 bzw. der Prozessor 50 die Signale bzw. Messwerte der Sensoreinrichtung 38 aus und steuert die Vorrichtung entsprechend den Eigenschaften der Wertdokumente. So kann sie in ihrer Funktion als Auswerteeinrichtung die Sensorsignale, insbesondere zur Ermittlung einer Echtheitsklasse und/oder einer Zustandsklasse eines bearbeiteten Wertdokuments, auswerten; in ihrer Funktion als Steuereinrichtung kann sie entsprechend der Auswertung die Transporteinrichtung 18 ansteuern und optional die Messdaten speichern. In anderen Ausführungsbeispielen kann auch eine von der Steuereinrichtung getrennte Auswerteeinrichtung vorgesehen sein, die über Schnittstellen mit den Sensoren der Sensoreinrichtung 38 einerseits und der Steuereinrichtung andererseits verbunden ist. Die Auswerteeinrichtung ist dann zur Auswertung der Sensorsignale ausgebildet und liefert das jeweilige Ergebnis an die Steuereinrichtung, die die Transportein-richtung ansteuert. Die im Folgenden geschilderten Auswertevorgänge können dann allein von der Auswerteeinrichtung durchgeführt werden.

Weiter steuert die Steuer- und Auswerteeinrichtung 48 die Ein-/ Ausgabeeinrichtung 46, unter anderem zur Anzeige von Bedienungsdaten, an und erfasst über diese Bedienungsdaten, die Eingaben eines Bedieners entsprechen.

Im Betrieb werden Wertdokumente aus der Zuführeinrichtung vereinzelt und an der Sensoreinrichtung 38 vorbei bzw. durch diese hindurch transportiert. Die Sensoreinrichtung 38 erfasst bzw. misst physikalische Eigenschaften des jeweils an ihr vorbei bzw. durch sie hindurch transportierten Wertdokuments und bildet Sensorsignale bzw. Messdaten, die die Messwerte für die physikalischen Eigenschaften beschreiben. Die Steuer- und Auswerteeinrichtung 48 klassifiziert in Abhängigkeit von den Sensorsignalen der Sensoreinrichtung 38 für ein Wertdokument und von in der Auswerteeinrichtung gespeicherten Klassifizierungsparametern das Wertdokument in eine von vorgegebenen Echtheits- und/oder Zustandsklassen und steuert durch Abgabe von Stellsignalen die Transporteinrichtung 18, hier genauer die Weichen 32 bzw. 34 so an, dass das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheitsklassen bzw. die Klassifizierung erfolgt dabei in Abhängigkeit von wenigstens einem vorgegebenen Echtheitskriterium.

Zu der im Folgenden genauer beschriebenen Prüfung von Wertdokumenten werden insbesondere von dem Transmissionssensor 42 erfasste Transmissionsbilder verwendet. Der Transmissionssensor 42 verfügt über einen Beleuchtungsabschnitt, mittels dessen ein vorgegebener Erfassungsbereich des Transportpfades mit optischer Strahlung im sichtbaren und in einem vorgegebenen infraroten Wellenlängenbereich beleuchtet werden kann. Auf der gegenüberliegenden Seite des Transportpfades 18 verfügt der Transmissionssensor 42 über eine Detektionseinrichtung zur ortsaufgelösten Erfassung eines Bildes im Wellenlängenbereich des sichtbaren Lichts und eines Infrarot-Transmissionsbildes in dem vorgegebenen infraroten Wellenlängenbereich.

Der Transmissionssensor 42 ist als Zeilensensor ausgebildet, der während des Transports des Wertdokuments durch den Sensor nacheinander Transmissionszeilenbilder von quer zur Transportrichtung des Wertdokuments verlaufenden Streifen des Wertdokuments erfasst. Dementsprechend umfasst die Detektionseinrichtung Detektorzeilen. Der Transmissionssensor 42 fügt die erfassten Zeilenbilder zu digitalen Transmissionsbildern zusammen, die Pixel umfassen, deren Eigenschaften durch Pixeldaten beschrieben werden. Insbesondere erfasst er ein digitales Transmissionsbild des Wertdokuments unter Bildung von die Pixel des Bildes beschreibenden Pixeldaten und überträgt diese an die Auswerteeinrichtung 48. Die Pixeldaten für ein Pixel beschreiben insbesondere eine Helligkeit, die die von der Detektionseinrichtung empfangene Intensität für das Pixel beschreibt. Der Transmissionssensor ist so ausgebildet, dass die Pixel jeweils Orten auf einem Quadratgitter entsprechen. Die Länge der Kanten eines Quadrats beträgt in diesem Ausführungsbeispiel etwa 0,2 mm, so dass die Auflösung etwa 125 dpi beträgt. Schematisch und zur besseren Veranschaulichung ist in Fig. 2 ein solches digitales Bild eines Wertdokument 12 gezeigt, in dem die Pixel 56 durch schwarze Quadrate bzw. Punkte an deren Zentrum gekennzeichnet sind.

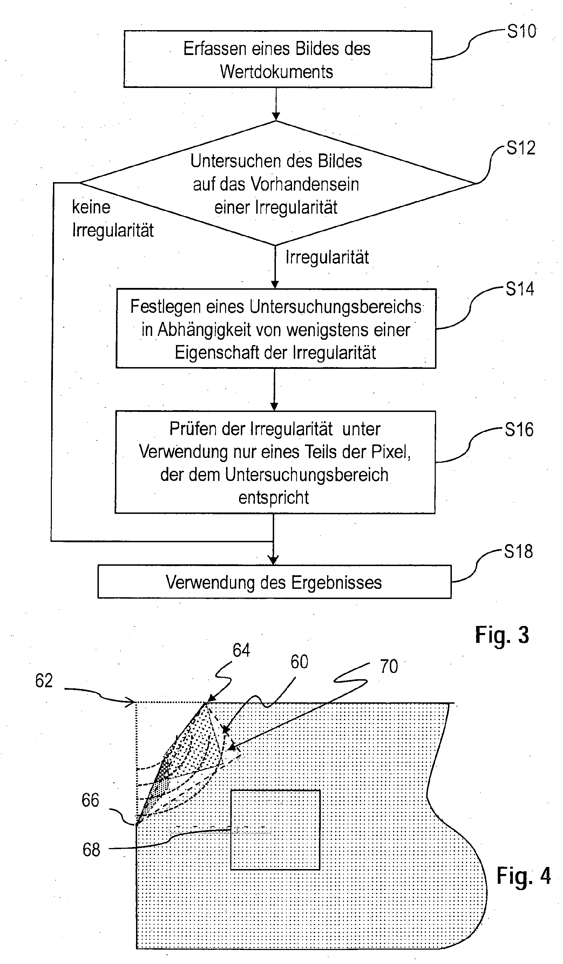

Bei dem im Folgenden beschriebene und in Fig. 3 veranschaulichte Verfahren zum Untersuchen eines Wertdokuments wird vorausgesetzt, dass Wertdokumente geprüft werden, die eine rechteckige Form aufweisen sollten, d. h. die einen Wertdokumenttyp aufweisen, für den unter anderem eine rechteckige Form der Wertdokumente charakteristisch ist. Das Bild in Fig. 2 zeigt eine Irregularität betreffend eine vorgegebene Eigenschaft des Wertdokuments, nämlich dessen Form. Genauer scheint die in Fig. 2 linke obere Ecke 58 zu fehlen, was durch ein Eselsohr bedingt sein kann oder dadurch, dass die Ecke abgerissen wurde und nun fehlt.

Zur Durchführung des Verfahrens ist in dem Speicher 52 ein Computerprogramm mit Programmcode gespeichert, bei dessen Ausführung mittels des Prozessors 50 das im Folgenden beschriebene Verfahren ausgeführt wird. Die Steuer- und Auswerteeinrichtung 48 stellt daher insbesondere auch eine Auswerteeinrichtung im Sinne der vorliegenden Erfindung und in Kombination mit dem Transmissionssensor 44 eine Untersuchungseinrichtung im Sinne der vorliegenden Erfindung dar.

Zur Untersuchung eines Wertdokuments wird zunächst in Schritt S10 mittels der Sensoreinrichtung 38, genauer des Transmissionssensors 42, ein Transmissionsbild des Wertdokuments erfasst, das, wie oben ausgeführt, Pixel umfasst, deren Helligkeitswerte durch entsprechende Pixeldaten gegeben sind.

In Schritt S12 wird das Bild darauf hin untersucht, ob eine Irregularität betreffend eine vorgegebene Eigenschaft des Wertdokuments vorhanden ist. In diesem Ausführungsbeispiel wird als vorgegebene Eigenschaft des Wertdokuments die Form verwendet. Genauer wird die Eigenschaft geprüft, dass die Form des Wertdokuments in dem Bild ein vollständiges Rechteck sein muss, dass vier Ecken aufweist. Hierzu kann zunächst das kleinste Rechteck ermittelt werden, in dem Pixel mit einer Helligkeit liegen, die sich entsprechend einen vorgegebenen, für den Hintergrund ohne Wertdokument spezifischen Schwellwert von den Hintergrund darstellenden Pixeln unterscheiden.

Dann kann für jede der Ecken des Rechtecks ermittelt werden, ob diese eine Irregularität darstellt. Dazu können Spaltenabschnitte von Pixeln gesucht werden, die parallel zu einer ersten der Seiten verlaufen und die beginnend mit der zu dieser ersten Seite orthogonalen, die Ecke des Rechtecks bildenden zweiten Seite des Rechtecks aufeinanderfolgende Pixel mit einer Helligkeit aufweisen, die dem Hintergrund entsprechen. In Fig. 2 können solche Spaltenabschnitte beispielsweise etwa senkrecht verlaufen. Solche Spaltenabschnitte können beginnend an der jeweiligen ersten Seite des Rechtecks und in einer Richtung von der ersten Seite weg gesucht werden. Die Spaltenabschnitte müssen dabei eine durch das Rauschverhalten des Sensors und die Auflösung gegebenen Mindestanzahl von Pixeln aufweisen; werden weniger Pixel gefunden, wird nicht mehr weiter nach Spaltenabschnitten gesucht.

Die Länge eines gefundenen an der ersten Seite anliegenden Spaltenabschnitts und die Lage des letzten gefundenen Spaltenabschnitts, der eine vorgegebene Anzahl von aufeinanderfolgenden Pixeln mit einer dem Hintergrund entsprechenden Helligkeit aufweist, entlang der zweiten Seite definieren ein Rechteck, das eine Irregularität darstellt. Die Ecke des Rechtecks und das Ende der ersten Spalte sowie die Lage der letzten Spalte legen ein Dreieck fest, das einer fehlenden Ecke in dem Bild des Wertdokuments entspricht.

Werden für alle Ecken keine Irregularitäten gefunden, wird ein Signal gebildet, das anzeigt, dass keine Irregularitäten an den Ecken vorhanden sind. Das Verfahren wird dann mit Schritt S18 fortgesetzt, in dem das Ergebnis verwendet wird, dass keine Irregularität in Bezug auf die Form gefunden wurde.

Andernfalls werden für jede der Ecken, bei denen eine Irregularität ermittelt wurde, die folgenden Schritte durchgeführt. In Fig. 3 ist nur der Fall dargestellt, dass nur eine Ecke gefunden wurde.

In Schritt S14 legt die Auswerteeinrichtung 48 in Abhängigkeit von wenigstens einer Eigenschaft der gefundenen Irregularität einen Untersuchungsbereich 60 (vgl. Fig. 4) fest. Genauer legt sie den Untersuchungsbereich von der Größe, Lage und, Form der gefundenen Irregularität fest. In Fig. 3 ist der Untersuchungsbereich 60 durch gestrichelte Linien gekennzeichnet. Der Untersuchungsbereich 60 wird folgendermaßen bestimmt. Ein erstes Dreieck ist durch die fehlende Ecke, gegeben durch die entsprechende Ecke 62 des in Schritt S12 verwendeten kleinsten Rechtecks, und die Abknickpunkte 64 und 66, an denen die Kontur des Wertdokuments in dem Bild an dessen Rändern abknickt, definiert. Der Untersuchungsbereich 60 ist dann das Dreieck, das sich durch Spiegelung des ersten Dreiecks an der Verbindungslinie zwischen den Abknickpunkten 64 und 66 ergibt.

In Schritt S16 prüft die Auswerteeinrichtung die Irregularität unter Verwendung nur eines Teils der Pixel, der dem Untersuchungsbereich entspricht. In diesem Ausführungsbeispiel wird dabei die Auflösung des digitalen Bildes um einen vorgegebenen Faktor, im Beispiel den .Faktor 2 herabgesetzt, so dass der Teil der Pixel des digitalen Bildes ein in seiner Auflösung reduziertes Bild des Untersuchungsbereichs bildet. Wie in Fig. 4 veranschaulicht geschieht dies folgendermaßen: Bei dem Ausgangsbild in Fig. 2 sind die Pixel 56 bzw. die den Pixeln entsprechenden Orte auf einem Quadratgitter angeordnet. Der zum Prüfen der Irregularität nur verwendete Teil der Pixel entspricht Orten in dem Untersuchungsbereich, die auf einem Quadratgitter liegen, dessen Quadrate eine Kantenlänge aufweisen, die doppelt so groß ist, wie die der Quadrate des Gitters für das erfasste Bild. Eines dieser Pixel ist in Fig. 4 durch das Bezugszeichen 70 gekennzeichnet.

Im vorliegenden Fall ermittelt die Auswerteeinrichtung 48 beim Prüfen der Irregularität, ob die Irregularität einem von wenigstens zwei möglichen Wertdokumentfehlern entspricht; im vorliegenden Beispiel sind die Wertdokumentfehler, die in dem Bild eine ähnliche Irregularität ergeben, das Vorliegen eines Eselsohrs und das Fehlen der Ecke, beispielsweise weil diese abgerissen wurde.

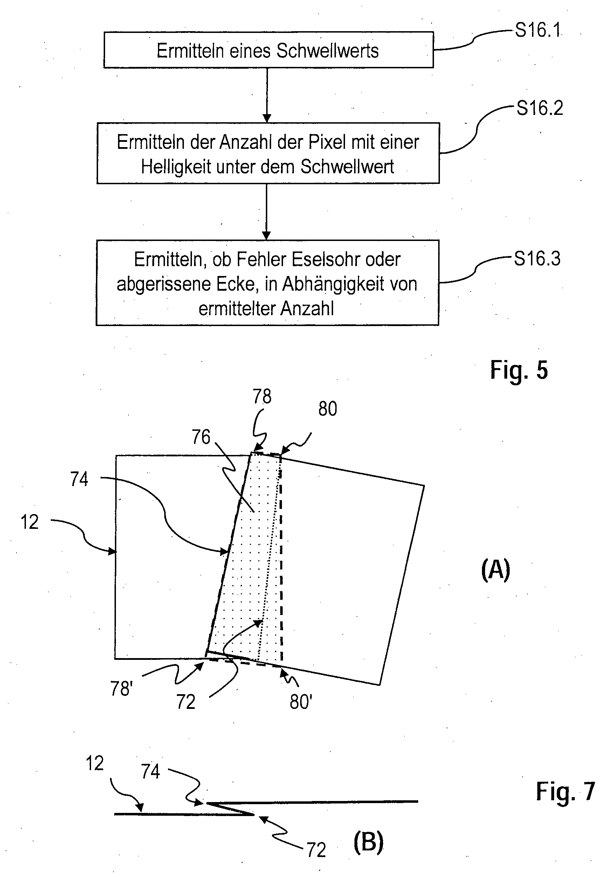

Der Schritt S16 umfasst Teilschritt S16.1 bis S16.3, die in Fig. 5 veranschaulicht sind.

Ein Eselsohr zeichnet sich dadurch aus, dass zwei Lagen des Wertdokuments im umgefalteten Bereich übereinander liegen und daher die Transmission in diesem Bereich stark reduziert ist. Bei einer abgerissenen Ecke dagegen sollte die Helligkeit im abgebildeten Teil des Wertdokuments der des unbeschädigten Wertdokuments entsprechen.

In Schritt S16.1 wird daher zur weiteren Untersuchung ein Schwellwert ermittelt, der der mittleren Helligkeit eines vorgegebenen Referenzbereichs 68 des Wertdokuments ohne Löcher oder Falten entspricht. Als Schwellwert kann insbesondere der arithmetische Mittelwert über die Helligkeiten der Pixel in dem Referenzbereich verwendet werden. Im vorliegenden Beispiel wird als Referenzbereich 68 ein Rechteck nahe dem Untersuchungsbereich 60 gewählt, in dem die über die Pixel gemittelte Helligkeit der des Wertdokuments ohne Falten entsprechen sollte.

In Schritt S16.2 ermittelt die Auswerteeinrichtung die Anzahl derjenigen Pixel von dem Teil der Pixel in dem Untersuchungsbereich, die als zu dunkel angenommen werden. Im vorliegenden Beispiel ermittelt sie dazu ein Histogramm, das die Häufigkeit von zu dunklen Pixeln, d.h. Pixeln mit einer Helligkeit unter dem Schwellwert, in dem Untersuchungsbereich als Funktion des Abstands von der Ecke des Rechtecks wiedergibt. Dazu wird der Abstand des gespiegelten Eckpunkts von dem Eckpunkt ermittelt. Dieser wird als Radius eines größten Kreises aufgefasst. Das Intervall zwischen 0 und diesem Abstand wird in eine vorgegebene Anzahl von gleichlangen Teilintervallen aufgeteilt. Die Intervallgrenzen entsprechen dann Radien von konzentrischen Kreisen um den Eckpunkt des Rechtecks. Insgesamt ergibt sich eine Art Ringstruktur.

Für jedes zu untersuchende Pixel in dem Untersuchungsbereich wird nun ermittelt, in welchem Teilintervall der Abstand des Pixels von dem Eckpunkt des Rechtecks liegt und ob der Helligkeitswert den vorgegebenen Schwellwert unterschreitet. Liegt der Helligkeitswert unter dem Schwellwert, wird ein Zähler um 1 erhöht.

Die Auswerteeinrichtung 48 vergleicht das so erhaltene Histogramm mit einem Referenzhistogramm. Das Referenzhistogramm hat die gleiche Anzahl von Bins wie das ermittelte Histogramm und ist in Abhängigkeit von der verwendeten Auflösung des Untersuchungsbereichs und dem Rauschverhalten der verwendeten Sensoren vorgegeben. Für alle Bins bzw. Teilintervalle wird hinweise die Anzahl der zu dunklen Pixel in dem ermittelten Histogramm mit der Anzahl in dem Referenzhistogramm verglichen. Ist die Pixelanzahl für das jeweilige Bin des ermittelten Histogramms größer als die entsprechende Anzahl in dem Referenzhistogramm wird ein Gesamtzähler erhöht. Der Gesamtzähler wird dann so skaliert, dass er einem Anteil an der Gesamtzahl der untersuchten Pixel, d. h. Pixel in dem Untersuchungsbereich entspricht. Der Gesamtzähler ist die relative Anzahl von Pixeln, die in Bezug auf den Schwellwert und das Referenzhistogramm zu dunkel sind.

In Schritt S16.3 ermittelt die Auswerteeinrichtung in Abhängigkeit von der ermittelten Anzahl, ob die Irregularität einem Eselsohr oder einer abgerissenen Ecke entspricht. Dazu prüft sie, ob die relative Anzahl zu dunkler Pixel einen vorgegebenen Grenzwert überschreitet. Ist dies der Fall, wird das Vorliegen eines Eselsohrs festgestellt. Andernfalls wird das Vorliegen einer abgerissenen Ecke festgestellt.

Das Verfahren wird dann mit Schritt S18 fortgesetzt, in dem das Ergebnis verwendet wird, beispielsweise um die Umlauffähigkeit der Banknote zu ermitteln.

Ein zweites Ausführungsbeispiel unterscheidet sich von dem ersten Ausführungsbeispiel dadurch, dass beim Prüfen der Irregularität nur dann nur ein Teil der Pixel des Untersuchungsbereichs verwendet wird, wenn die Fläche des Untersuchungsbereichs bzw. die Anzahl der Pixel darin einen entsprechenden vorgegebenen Grenzwert überschreitet. Ansonsten werden alle Pixel verwendet.

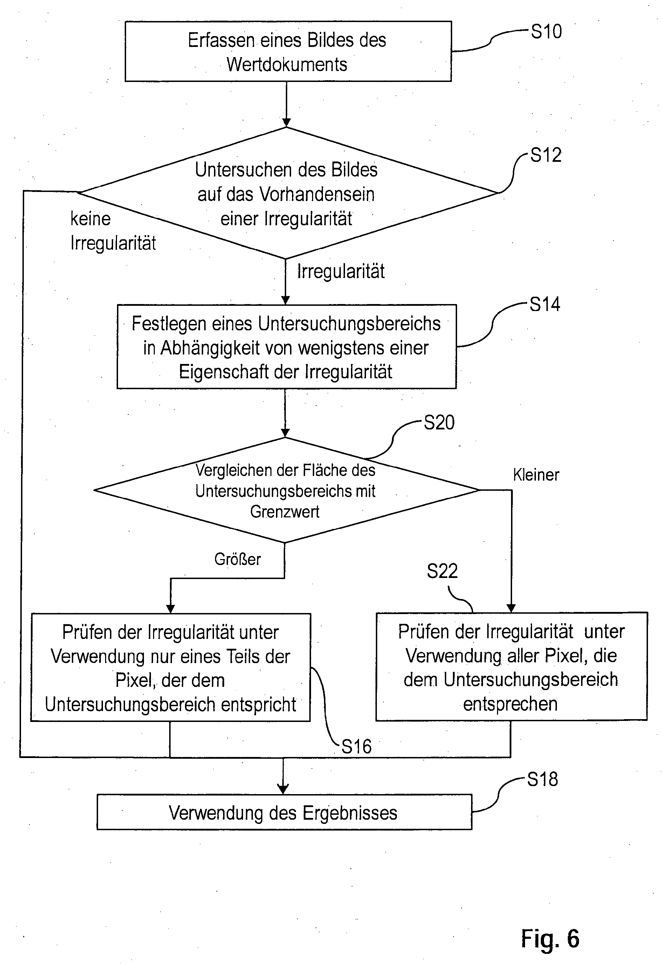

Das in Fig. 6 grob schematisch veranschaulichte Verfahren unterscheidet sich von dem ersten Ausführungsbeispiel nur durch die Schritte S20 und S22, die anderen Schritte sind unverändert.

In dem Schritt S14 folgenden Schritt S20 ermittelt die Auswerteeinrichtung 48 eine Fläche des in Schritt S14 ermittelten Untersuchungsbereichs und vergleicht diese mit einem entsprechenden vorgegebenen Grenzwert für die Fläche. In anderen Ausführungsbeispielen kann die Auswerteeinrichtung 48 statt der Fläche des Untersuchungsbereichs 60 die dem Untersuchungsbereich entsprechende Anzahl von Pixeln ermitteln und mit einem entsprechenden Grenzwert für die Pixelanzahl ermitteln. Der Grenzwert ist dabei in Abhängigkeit von der Rechengeschwindigkeit der Auswerteeinrichtung und der zur Durchführung des Verfahrens zur Verfügung stehenden Zeit vorgegeben und in der Auswerteeinrichtung 48 gespeichert.

Übersteigt die ermittelte Fläche (bzw. Anzahl) den Grenzwert, wird das Verfahren wie im ersten Ausführungsbeispiel mit dem unveränderten Schritt S16 fortgesetzt.

Andernfalls führt die Auswerteeinrichtung 48 einen Verfahrensschritt S22 aus, der sich von dem Schritt S16 allein dadurch unterscheidet, dass nun alle Pixel, die dem Untersuchungsbereich 60 entsprechen, verwendet werden, und nicht nur ein Teil.

Ein weiteres Ausführungsbeispiel unterscheidet sich von dem ersten Ausführungsbeispiel dadurch, dass zur Prüfung der Irregularität wie im ersten Ausführungsbeispiel kein Histogramm verwendet wird, sondern nur die Anzahl der dunklen Pixel bezogen auf die Anzahl der verwendeten Pixel des in der Auflösung reduzierten Bildes des Untersuchungsbereichs.

Ein weiteres Ausführungsbeispiel unterscheidet sich von dem vorhergehenden Ausführungsbeispiel darin, dass nur eine Prüfung auf eine Irregularität in Form einer Z-Falte durchgeführt wird. Dies ist in Fig. 7 veranschaulicht. Das Teilbild A zeigt dabei eine Ansicht auf die Fläche des Wertdokuments, das Teilbild B eine Ansicht parallel zur Fläche des Wertdokuments bzw. auf die Kante. Unter einer Z-Falte wird dabei verstanden, dass das Wertdokument in einer Richtung quer zu einem seiner Ränder entlang einer Linie 72 zunächst zurückgefaltet und dann entlang einer weiteren Linie 74, die parallel zu der Linie 72 oder in einem spitzen Winkel zu dieser verläuft, nach vorn gefaltet ist. Die Irregularität könnte hier auf eine Z-Falte oder einen Klebestreifen zurückzuführen sein.

Auch hier kann in Abhängigkeit von der Lage von Abknickpunkten entlang den Rändern des Wertdokuments und der Richtung der durch die Abknickpunkte getrennten Abschnitte der Ränder ein Untersuchungsbereich 76 ermittelt werden. Die Kontur dieses Untersuchungsbereichs 76 ist in Fig. 7 gestrichelt gezeigt. Der Untersuchungsbereich kann beispielsweise durch ein Polygon gegeben sein, dessen Ecken die Abknickpunkte 78, 80 entlang des Randes, der konvex verläuft, und die Schnittpunkte 78' und 80' der Kontur des Wertdokuments in dem Bild und von Geraden durch die Abknickpunkte 78 und 80, die orthogonal zu den Randabschnitten verlaufen, auf deren Verlängerung die Abknickpunkte liegen.

In anderen Ausführungsbeispielen kann ein Farbremissionsbild verwendet werden, die Pixeldaten umfassen dann Farbkoordinaten für die Farbe jedes Pixels.

## Patentansprüche

1. Verfahren zum Untersuchen eines Wertdokuments (12) unter Verwendung eines digitalen Bildes des Wertdokuments (12), das Pixel (56) umfasst, bei dem
das Bild auf das Vorhandensein wenigstens einer Irregularität betreffend eine vorgegebene Eigenschaft des Wertdokuments (12) untersucht wird, bei Auffinden einer solchen Irregularität in Abhängigkeit von der Größe und/oder Lage und/oder Form der Irregularität in dem Bild ein Untersuchungsbereich (60) festgelegt **gekennzeichnet dadurch, dass** der Untersuchungsbereich kleiner ist als das Bild des Wertdokumentes und der die Irregularität darstellt, und
die Irregularität (58) geprüft wird, wobei nur ein Teil derjenigen Pixel (56) des digitalen Bildes verwendet wird, die dem Untersuchungsbereich (60) entsprechen und
bei dem der Teil der Pixel (56) des digitalen Bildes ein in seiner Auflösung reduziertes Bild des Untersuchungsbereichs (60) bildet.

2. Verfahren nach Anspruch 1, bei dem die vorgegebene Eigenschaft des Wertdokuments (12) dessen Form ist.

3. Verfahren nach Anspruch 1 oder 2, bei dem beim Prüfen der Irregularität nur dann nur der Teil derjenigen Pixel (56) verwendet wird, die dem Untersuchungsbereich (60) entsprechen, wenn die Größe des Untersuchungsbereichs (60) oder der Anzahl der Pixel, die den Untersuchungsbereich (60) darstellen, einen vorgegebenen Grenzwert überschreitet.

4. Verfahren nach einem der vorhergehenden Ansprüche, bei dem beim Prüfen der Irregularität ermittelt wird, ob die Irregularität einem von wenigstens zwei möglichen Wertdokumentfehlern entspricht.

5. Verfahren nach einem der vorhergehenden Ansprüche, bei dem die Pixel (56) des digitalen Bildes Orten auf einem Rechteckgitter entsprechen und der bei dem Prüfen verwendete Teil der Pixel (56) auf einem Untergitter des Rechteckgitters liegt.

6. Verfahren nach einem der vorhergehenden Ansprüche, bei dem das digitale Bild des Wertdokuments (12) unter Verwendung eines optischen Sensors (40) erfasst wird.

7. Computerprogramm mit Programmcode, bei dessen Ausführung mittels wenigstens einen Prozessors (50) ein Verfahren nach einem der vorhergehenden Ansprüche ausgeführt wird.

8. Physischer Datenträger, auf dem ein Computerprogramm nach Anspruch 7 gespeichert ist.

9. Untersuchungseinrichtung zum Untersuchen eines Wertdokuments (12) mit
einem optischen Sensor (40) zum Erfassen eines digitalen Bildes des Wertdokuments (12), und
einer Auswerteeinrichtung (48), die dazu ausgebildet ist, unter Verwendung eines mittels des optischen Sensors (40) erfassten digitalen Bildes ein Verfahren nach einem der Ansprüche 1 bis 6 durchzuführen.

10. Untersuchungseinrichtung nach Anspruch 9, bei der die Auswerteeinrichtung (48) wenigstens einen Prozessor (50) und einen Speicher (52) aufweist, in dem ein Computerprogramm nach Anspruch 7 gespeichert ist, so dass bei Ausführung des Programmcodes des Computerprogramms mittels des Prozessors (50) das Verfahren nach einem der Ansprüche 1 bis 7 durchgeführt wird.

11. Vorrichtung zur Bearbeitung von Wertdokumenten (12) mit
einer Zuführeinrichtung (14) zur Zuführung von einzelnen oder vereinzelten zu bearbeitenden Wertdokumenten (12),
einer Ausgabeeinrichtung (16) mit wenigstens einem Ausgabeabschnitt (24, 25, 26) zur Aufnahme bearbeiteter Wertdokumente (12),
einer Transporteinrichtung (18) zum Transportieren von einzelnen oder vereinzelten Wertdokumenten (12) von der Zuführeinrichtung (14) zu der Ausgabeeinrichtung (16), und
einer Untersuchungsvorrichtung nach Anspruch 9 oder 10,
wobei der optische Sensor (40) der Untersuchungseinrichtung dazu ausgebildet und eingerichtet ist, ein digitales Bild des Wertdokuments (12) zu erfassen, während es mittels der Transporteinrichtung (18) transportiert wird.

## Claims

1. A method for examining a value document (12) while employing a digital image of the value document (12) which comprises pixels (56),
in which the image is examined for the presence of at least one irregularity relating to a pre-specified property of the value document (12), upon finding such an irregularity, an examination region (60) representing the irregularity is fixed in dependence on the size and/or position and/or form of the irregularity in the image, **characterized in that** the examination region is smaller than the image of the value document and which represents the irregularity, and the irregularity (58) is checked, wherein only a part of those pixels (56) of the digital image that correspond to the examination region (60) is employed and
in which the part of the pixels (56) of the digital image forms an image of the examination region (60) that is reduced in its resolution.

2. The method according to claim 1, in which the pre-specified property of the value document (12) is its form.

3. The method according to claim 1 or 2, in which upon checking the irregularity only the part of those pixels (56) that correspond to the examination region (60) is employed only when the size of the examination region (60) or the number of pixels that represent the examination region (60) exceeds a pre-specified limiting value.

4. The method according to any of the preceding claims, in which it is established upon checking the irregularity whether the irregularity corresponds to one of at least two possible value-document defects.

5. The method according to any of the preceding claims, in which the pixels (56) of the digital image correspond to locations on a rectangular grid, and the part of the pixels (56) that is employed upon checking lies on a subgrid of the rectangular grid.

6. The method according to any of the preceding claims, in which the digital image of the value document (12) is captured while employing an optical sensor (40).

7. A computer program with program code upon whose execution by means of at least one processor (50) a method according to any of the preceding claims is executed.

8. A physical data carrier on which a computer program according to claim 7 is stored.

9. An examination device for examining a value document (12) having
an optical sensor (40) for capturing a digital image of the value document (12), and
an evaluation device (48) which is configured for carrying out a method according to any of claims 1 to 6 while employing a digital image captured by means of the optical sensor (40).

10. The examination device according to claim 9, in which the evaluation device (48) has at least one processor (50) and a storage (52), a computer program according to claim 7 being stored therein, so that upon execution of the program code of the computer program by means of the processor (50) the method according to any of claims 1 to 7 is carried out.

11. An apparatus for processing value documents (12) comprising
a feeding device (14) for feeding single or singled value documents (12) to be processed,
an output device (16) having at least one output portion (24, 25, 26) for receiving processed value documents (12),
a transport device (18) for transporting single or singled value documents (12) from the feeding device (14) to the output device (16),
an examination apparatus according to claim 9 or 10,
wherein the optical sensor (40) of the examination device is configured and adapted for capturing a digital image of the value document (12) while it is being transported by means of the transport device (18).

## Revendications

1. Procédé d'examen d'un document de valeur (12) en utilisant une image numérique du document de valeur (12), laquelle comprend des pixels (56), dans lequel
l'image est examinée pour discerner s'il y a au moins une irrégularité concernant une propriété prédéterminée du document de valeur (12), dans le cas d'une décèlement d'une telle irrégularité, en fonction de la taille et/ou de la position et/ou de la forme de l'irrégularité dans l'image, une zone d'examen (60) représentant l'irrégularité est définie, **caractérisé en ce que** la zone d'examen est plus petite que l'image du document de valeur, et l'irrégularité (58) est examinée, cependant qu'uniquement une partie des pixels (56), de l'image numérique, qui correspondent à la zone d'examen (60), est utilisée, et
dans lequel la partie des pixels (56) de l'image numérique constitue une image, de la zone d'examen (60), à dissolution réduite.

2. Procédé selon la revendication 1, dans lequel la propriété prédéterminée du document de valeur (12) est sa forme.

3. Procédé selon la revendication 1 ou 2, dans lequel, lors de l'examen de l'irrégularité, ce n'est que quand la taille de la zone d'examen (60) ou le nombre de pixels représentant la zone d'examen (60) dépasse une valeur seuil prédéterminée qu'uniquement la partie des pixels (56) qui correspondent à la zone d'examen (60) est utilisée.

4. Procédé selon une des revendications précédentes, dans lequel, lors de l'examen de l'irrégularité, il est déterminé si l'irrégularité correspond à un d'au moins deux défauts possibles de document de valeur.

5. Procédé selon une des revendications précédentes, dans lequel les pixels (56) correspondent à des emplacements sur une grille rectangulaire et la partie des pixels (56) utilisée lors de l'examen se trouve sur une sous-grille de la grille rectangulaire.

6. Procédé selon une des revendications précédentes, dans lequel l'image numérique du document de valeur (12) est saisie en utilisant un capteur optique (40).

7. Produit programme d'ordinateur muni de code de programme lors de l'exécution duquel, au moyen d'au moins un processeur (50), un procédé selon une des revendications précédentes est exécuté.

8. Support de données physique sur lequel un programme d'ordinateur selon la revendication 7 est mémorisé.

9. Equipement d'examen pour l'examen d'un document de valeur (12), ayant
un capteur optique (40) pour la saisie d'une image numérique du document de valeur (12), et
un équipement d'évaluation (48) conçu pour, en utilisant une image numérique saisie au moyen d'un capteur optique (40), réaliser un procédé selon une des revendications de 1 à 6.

10. Equipement d'examen selon la revendication 9, dans lequel l'équipement d'évaluation (48) comporte au moins un processeur (50) et une mémoire (52) dans laquelle un programme d'ordinateur selon la revendication 7 est mémorisé, de telle sorte que, lors de l'exécution du code de programme du programme d'ordinateur au moyen du processeur (50), le procédé selon une des revendications de 1 à 7 est réalisé.

11. Dispositif de traitement de documents de valeur (12) doté
d'un équipement d'amenée (14) pour l' amenée de documents de valeur (12) individuels ou déliassés à traiter,
d'un équipement de sortie (16) ayant au moins une section de sortie (24, 25, 26) pour la réception de documents de valeur (12) traités,
d'un équipement de transport (18) pour le transport de documents de valeur (12) individuels ou déliassés de l'équipement d'amenée (14) à l'équipement de sortie (16), et
un dispositif d'examen selon la revendication 9 ou 10,
cependant que le capteur optique (40) de l'équipement d'examen est conçu et équipé pour saisir une image numérique du document de valeur (12) pendant qu'il est transporté au moyen de l'équipement de transport (18).
